# EUROPEAN PATENT APPLICATION

(11) **EP 4 141 853 A1**
(43) Date of publication of application: **01.03.2023**
(21) Application number: 22185109.0
(22) Date of filing: 15.07.2022
(51) Int. Cl.: G09F 13/22, G09F 13/24

(54) **SAFETY TRIANGLE**

(30) Priority: 23.07.2021 US 202163225043 P
(71) Applicant: Illinois Tool Works, Inc., Glenview, Illinois 60025 (US)
(72) Inventor: COSTLE, Carey Christopher, Glenview, 60025 (US); RICHEY, Stephen Edward, Glenview, 60025 (US)
(74) Representative: HGF

(57) **Abstract**

A high visibility safety device including a frame having one or more sockets that are each compatible with a first end of a chemical glow stick. When the glow sticks are engaged with the one or more sockets, such as by a press-fit of one glow stick end into a socket, a standable illuminated frame is enabled.

## Description

### BACKGROUND OF THE INVENTION

### FIELD OF THE INVENTION

The invention relates to a safety triangle for use in automotive and other applications where improved visibility creates a safer environment.

### DESCRIPTION OF PRIOR ART

High visibility safety devices for automotive, construction and similar applications may include reflective triangles, flares, flashlights, strobes and similar devices. Such devices are often limited in their effectiveness by size, visibility, lack of fresh batteries, and other limitations.

A need therefore exists for a highly visible yet compact visible safety device, preferably one that does not use batteries yet remains available for use on short notice.

### SUMMARY OF THE INVENTION

A high visibility safety device is provided, such as can be stored in a vehicle and displayed to indicate caution or emergencies. The safety device of embodiments includes one or more illumination rods. The one or more illumination rods form an illuminated beacon, such as a safety triangle. A single illumination rod can be used, but preferably two or three illumination rods are used to form a partial or full triangle or a pyramidal shape.

The illumination rods can be battery powered LED or other light bars, but are preferably each a self-contained, short-term light-source such as a glow stick. Suitable glow sticks, also known as light sticks, chem lights, light wands, or light rods, are generally formed of a translucent plastic tube containing isolated substances that, when combined, make light through chemiluminescence.

In embodiments, the safety device includes a frame having one or more sockets each compatible with a first end of an illumination rod, such that when one or more illumination rod are engaged with the one or more sockets, a standable illuminated frame is enabled. The illumination rods can be vertical extensions from the frame, with free ends facing upwards from a frame base, or downwards as legs for a tripodic, or pyramidal device. A horizonal rod can be used to complete a three-sided illuminated triangle.

A safety triangle as disclosed preferably includes a small and/or foldable frame having a plurality of sockets that assemble with standard size glow sticks of the kind that use a reactive fluorescing composition that glows once the glow stick is partially bent and/or otherwise activated.

In embodiments, the safety device includes at least two sockets, each compatible with one end of an illumination rod. A second end of at least two of the illumination rods is a free end configured to extend upward or set upon a surface. In other embodiments, there are three, four, or more sockets, each for one end of an illumination rod. The illumination rod can be held in the socket by friction, threads, or any other suitable means.

In embodiments, the safety device includes a tripodic frame including the one or more sockets and any other leg(s) extending at an angle to each other. The device can include three legs in an assembled configuration, with one, two or all three of the legs being an illumination rod. In embodiments, the device includes non-illumination legs or extensions, either fixed or attachable to the socket frame.

The frame can include one or more foldable hinges, such as between socket pairs or one for each moveable socket, for folding the device and reducing a storage footprint. The hinge may be particularly useful for non-illuminating frame legs, or for storing a preassembled safety device. In other embodiments, the socket frame and the illumination rods are stored unconnected in a storage container. Extra illumination rods can be included for future uses before replenishment is possible.

Embodiments further include a use of a glow stick for a high visibility safety device, such as according to any of the claims or described embodiments. Embodiments also include a high visibility safety device kit including the frame and a plurality of attachable glow sticks or other illumination rods as discussed and claimed herein.

Embodiments further include methods of using a high visibility safety device as discussed and claimed herein. The methods may include steps of: inserting a first end of one or more glow sticks or other illumination rods into one or more sockets of a frame to form a standable illuminated frame; and setting the standable illuminated frame on a surface near an area of safety concern. The frame can be set on the surface on a second, free end, which is opposite the first end, of each illumination rod extending upwards, or the second, free end of each of the one or more illumination rods setting on the surface as support legs. When the safety device is no longer needed, the method includes removing the one or more illumination rods from the frame, such as for storage and/or disposal.

### BRIEF DESCRIPTION OF THE DRAWINGS

The above-mentioned and other features and objects of this invention will be better understood from the following detailed description taken in conjunction with the drawings.
Fig. 1 is a perspective front view of a safety triangle in a fully assembled condition, according to one embodiment.
Fig. 2 is a perspective front view of a safety triangle in a fully assembled condition, according to another embodiment.
Fig. 3 is a side perspective view of the safety triangle shown in Fig. 2.
Figs. 4-8 shows different views of a safety triangle in a expanded use configuration, according to another embodiment.
Fig. 9 shows a safety triangle of Figs. 4-8 folded into a storge position.
Fig. 10 shows a safety device disassembled in a storage container, according to another embodiment.

### DESCRIPTION OF PREFERRED EMBODIMENTS

The figures show various embodiments of a high visibility safety device, generally referred to as a safety triangle. The safety device preferably includes a base frame having one or more sockets that are each compatible with one end of a glow stick such that when one or more glow sticks are engaged with the one or more sockets, a standable illuminated frame is enabled.

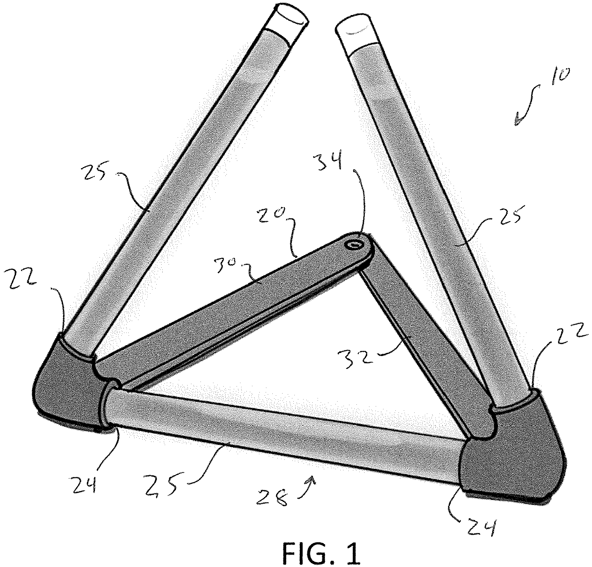

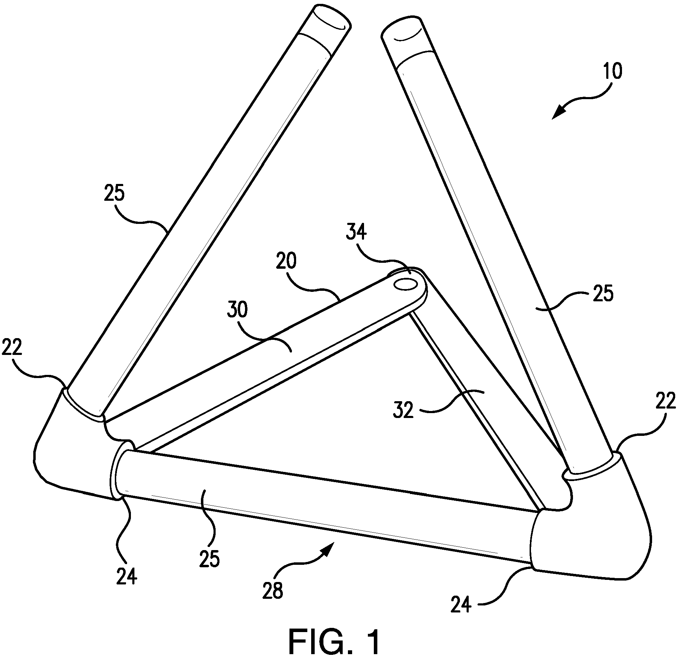

Fig. 1 shows one embodiment of a safety device 10 having a foldable frame 20 and a set of sockets. Two upwardly extending sockets 22 are each engaged with a separate glow stick 25 to create two sides of an upward extending triangle. A third glow stick 25 is then joined between two facing sockets 24 to create a hypotenuse of the triangle. The frame includes two side legs 30, 32, joined by hinge 34. Each of side legs 30, 32 includes one socket 22 and one socket 24, disposed at the suitable angle to each other to form the desired triangle. As a result, one horizontal glow stick 25 that is generally coplanar with the two foldable side legs 30, 32 of the frame 20 combine to create a lower end 28 upon which the safety device 10 may rest on a generally flat surface. Following use, the glow sticks 25 may be discarded and the frame 20 may be folded into a compact stowable form for later use.

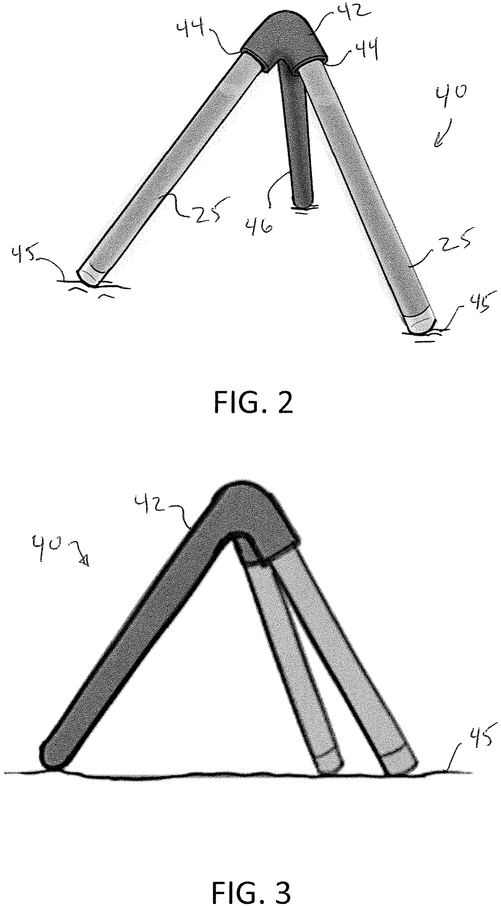

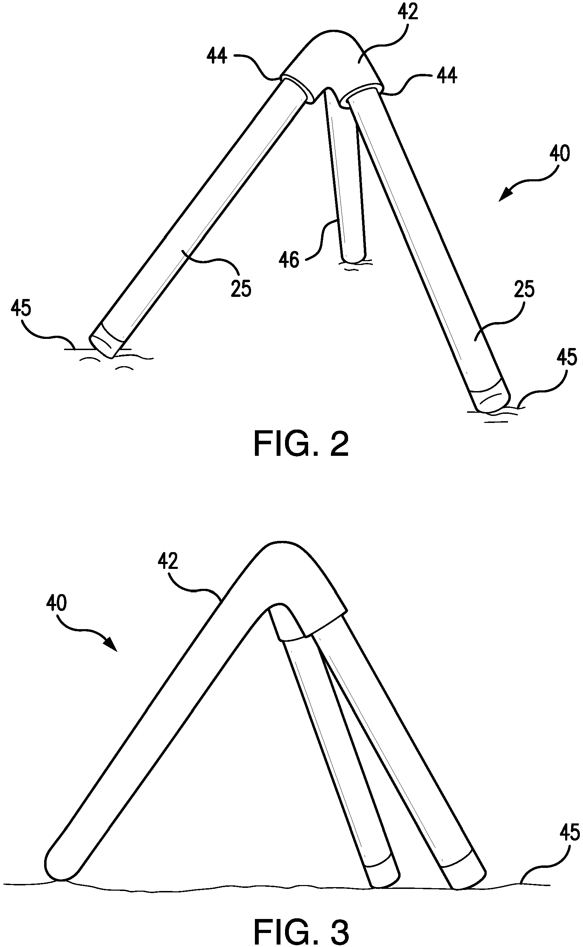

Figs. 2 and 3 show another embodiment of a safety device 40, wherein a solid frame 42 includes two sockets 44. The sockets 44 are angled with respect to each other, to provide the desired angle between the glow sticks 25. A glow stick 25 is joined into each socket 44 to create two legs of a tripod, wherein the frame 42 includes the third leg 46. The tripod safety device 40 may then be placed on a generally flat surface 45, with the free ends of glow sticks 25 and leg 46 downward on the surface 45, for visibly warning others of the situation. The third leg 46 is desirably integral with the remainder of the frame 42, but can also be separate and attachable.

Alternatively to the embodiment shown in Figs. 2 and 3, three glow sticks may form the three legs of the tripodic, pyramidal safety device, resulting in more visibility and a more compact device for storage following use.

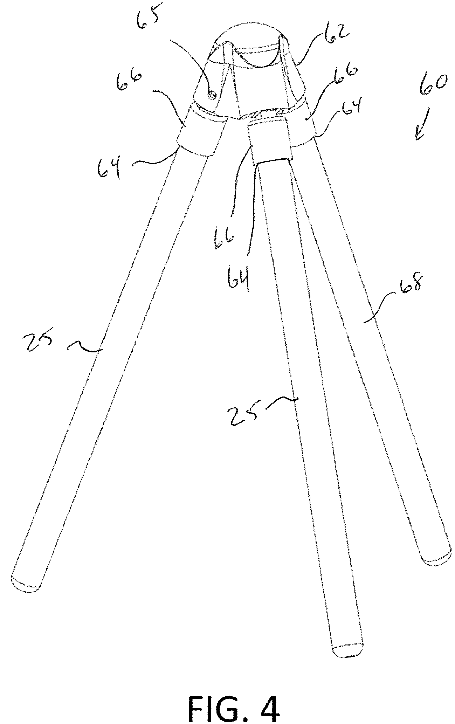

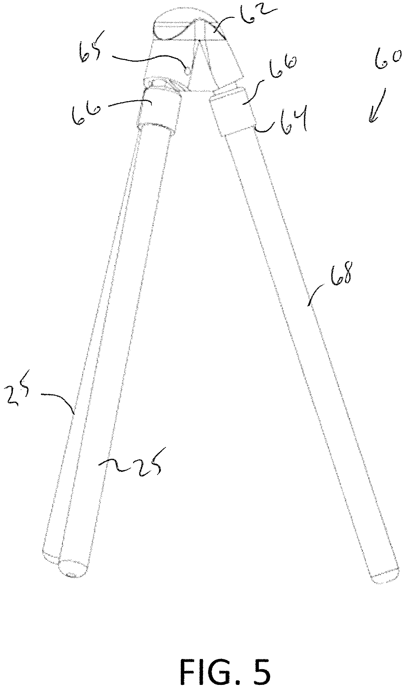

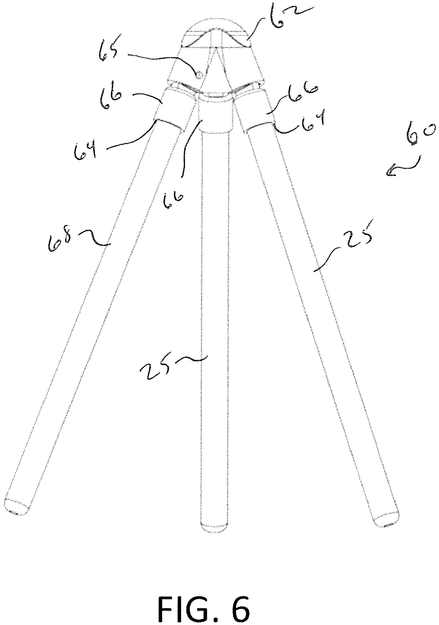

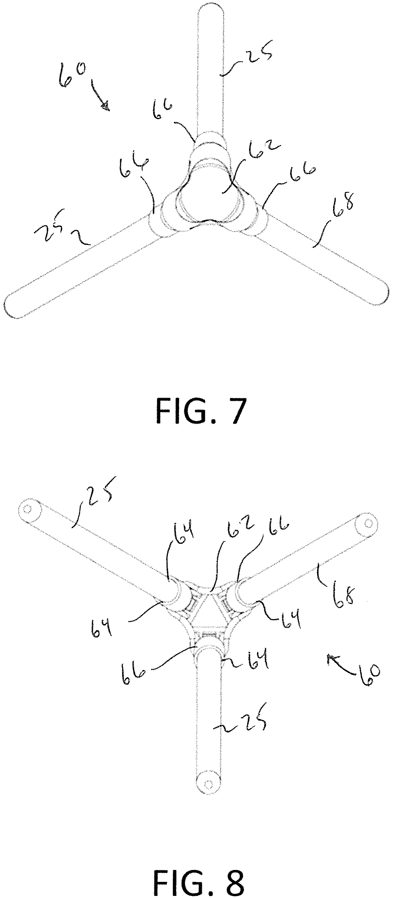

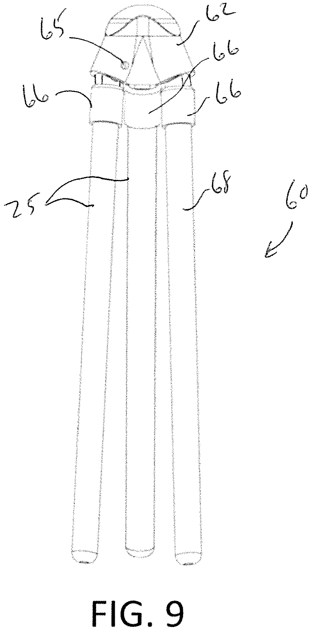

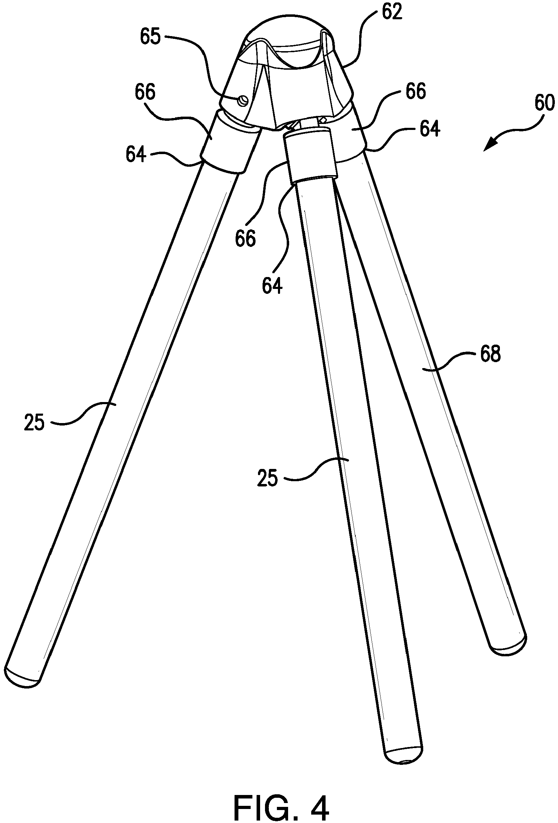

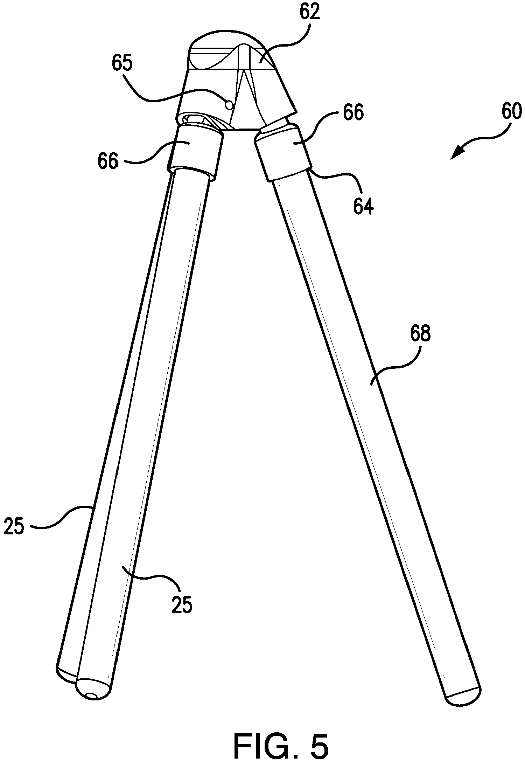

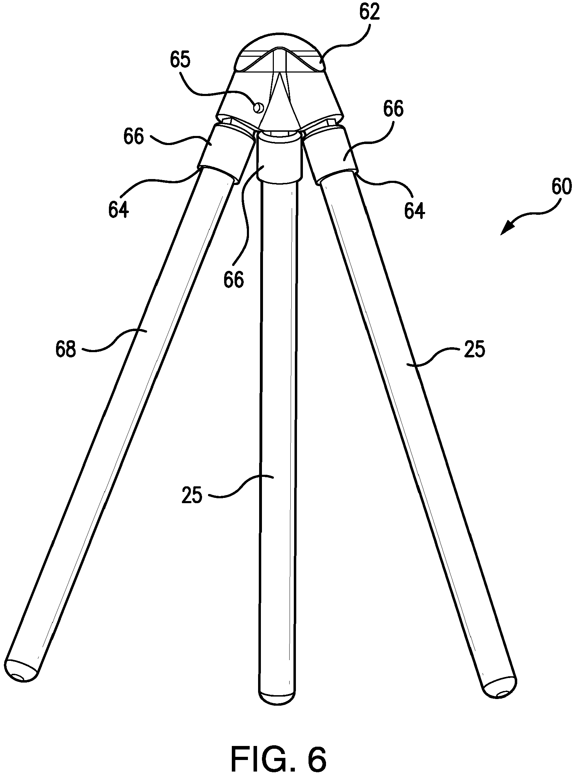

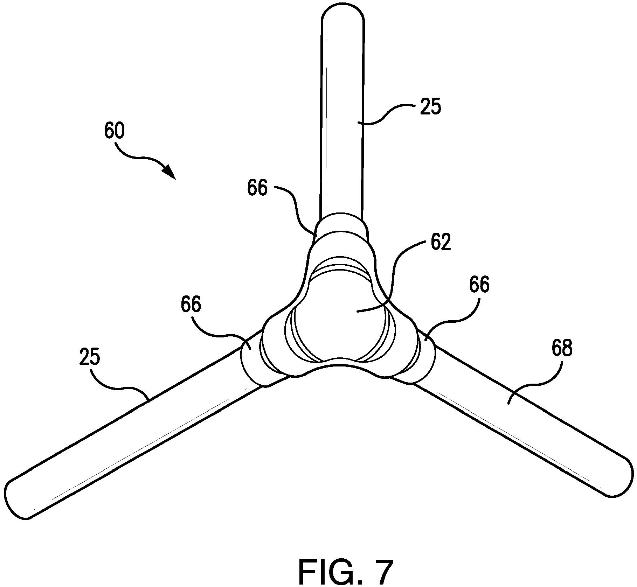

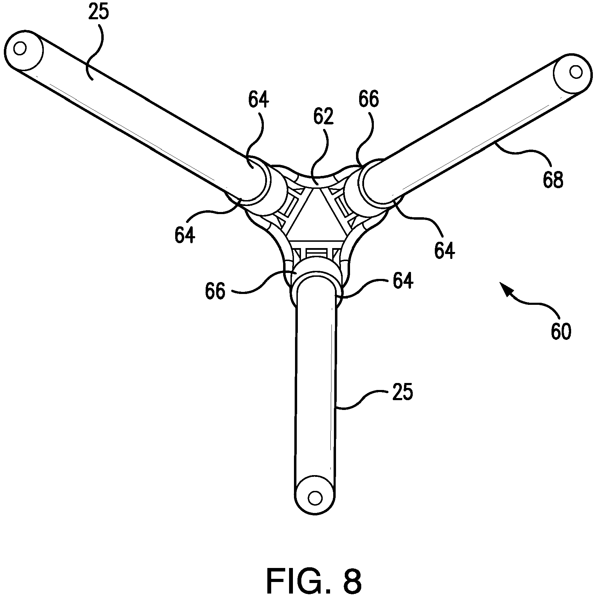

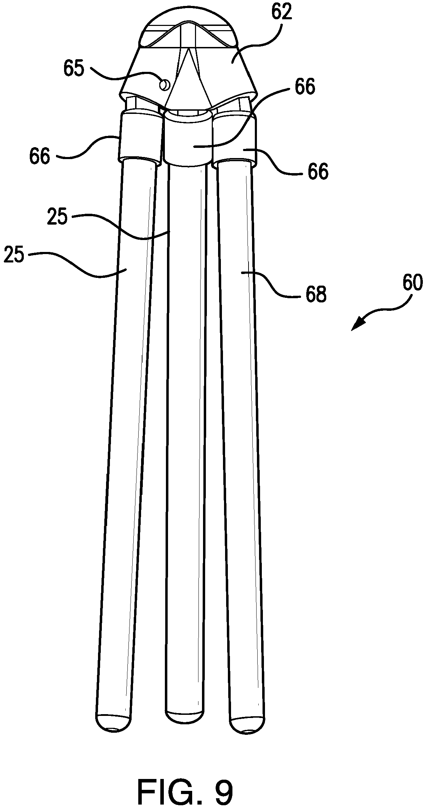

Figs. 4-9 show hinged sockets allowing the user to move the safety device 60 between an expanded position shown in Figs. 4-8 and a collapsed storage position of Fig. 9. In Figs. 4-9, the safety device 60 includes a frame 62 with three socket extensions 66 each including a socket opening 64 for receiving (e.g., by a friction fit) an end of a glow stick 25, other illumination rod, or a non-illuminating matching leg 68. Each socket extension 66 is secured to the remaining top portion of frame 62 by a hinge 65, allowing the socket extensions 66 to move between the storage and use positions. The sockets 64 are preferably equidistant about the bottom periphery of the frame 62, and extending or extendable at the same angle outward from a frame centerline, but variations in angles and position can be used, depending on need. The non-illuminating leg 68 allows for a partial triangle to be formed by the two glow sticks 25, thereby better matching the traditional caution triangle.

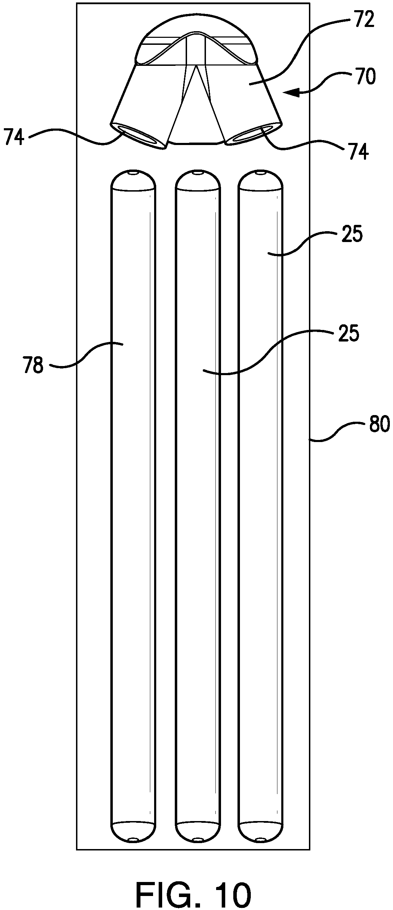

Fig. 10 shows a safety device 70 similar to Figs. 4-8, but without hinged sockets, and disassembled for storage, before use. The frame 72 and the unconnected glow sticks 25 are stored in a carrying bag or other container 80. In this embodiment, it is shown that each glow stick 25 (or non-illuminating leg 78) has two identical ends, where either end can be press-fit by the user into a correspondingly sized and shaped socket 74. In an alternative embodiment each glow stick or leg has a connector (e.g., threads) at a first end that fits within the corresponding frame socket.

Various sizes, shapes, and configurations are available for the safety device, frame, and/or glow sticks described herein. For example, the length, width, color, and/or end connection of the glow sticks can vary, depending on need. The number and orientation of the glow sticks can vary, such as described above. The tripodic safety devices shown in Figs. 2-8 can alternatively include one or two foldable, hinged connections between the sockets for the glow sticks, such that, for example, the non-illuminating leg does not fold.

Thus an easily storable and reusable safety device is provided. The safety device provides improved visibility during use, particularly in low light situations.

While in the foregoing specification this invention has been described in relation to certain preferred embodiments thereof, and many details have been set forth for purpose of illustration, it will be apparent to those skilled in the art that the device and placard are susceptible to additional embodiments and that certain of the details described herein can be varied considerably without departing from the basic principles of the invention.

## Claims

**1.** A high visibility safety device comprising:
a frame, the frame having one or more sockets that are each compatible with a first end of an illumination rod such that when one or more illumination rod are engaged with the one or more sockets, a standable illuminated frame is enabled.

**2.** The safety device according to claim 1 further comprising two sockets, each compatible with one end of the illumination rod.

**3.** The safety device according to claim 1 or 2 wherein a second end of the illumination rod comprises a free end configured to extend upward or set upon a surface.

**4.** The safety device according to one of the preceding claims further comprising a tripodic frame including the one or more sockets extending at an angle to each other.

**5.** The safety device of claim 4, further comprising three legs in an assembled position.

**6.** The safety device according to one of the preceding claims, wherein the frame comprises a non-illuminating extension, preferably configured as a leg.

**7.** The safety device according to one of the preceding claims, wherein the frame comprises a plurality of sockets for attachment of three illumination rods.

**8.** The safety device according to one of the preceding claims, wherein the frame comprises a foldable hinge.

**9.** The safety device according to one of the preceding claims wherein the illumination rod comprises a glow stick.

**10.** Use of a glow stick for a high visibility safety device according to one of the preceding claims.

**12.** A high visibility safety device kit including the frame and a plurality of attachable illumination rods according to one of the preceding claims.

**13.** A method of using a high visibility safety device according to one of the preceding claims, the method comprising:
inserting a first end of one or more illumination rods into one or more sockets of a frame to form a standable illuminated frame; and
setting the standable illuminated frame on a surface near an area of safety concern.

**14.** The method of claim 13, further comprising setting a second, free end, which is opposite the first end, of each of the one or more illumination rods on the surface.

**15.** The method of claim 13 or 14, further comprising removing the one or more illumination rods from the frame.
